# EUROPEAN PATENT APPLICATION

(11) **EP 0 955 579 A1**
(43) Date of publication of application: **10.11.1999**
(21) Application number: 97901826.4
(22) Date of filing: 04.02.1997
(51) Int. Cl.: G06F 9/44

(54) **OBJECT MANAGEMENT METHOD AND APPARATUS AND DATA STRUCTURE**

(30) Priority: 05.02.1996 WO PCT/JP96/00227
(71) Applicant: Athena Telecom Lab, Inc., Koganei-shi, Tokyo 184 (JP)
(72) Inventor: KAMIMURA, Kunio, Tokyo 184 (JP)
(74) Representative: Desrousseaux, Grégoire Marie
(86) International application number: PCT/JP97/00264
(87) International publication number: WO 97/29422

(57) **Abstract**

This invention introduces class identification information for identifying the class of an object and makes it easy to retain, reproduce and transfer the object. An object tree as a tree-like structure for storing objects is also devised. A pointer can be retained and transferred by giving the object identification information to the object and converting the pointer to the combination of the object identification information. This invention is convenient for handling logic models representing various logical relationships. When elements of information distributed to a plurality of computers connected to a communication network such as an internet are linked together and a large scale logic model is reproduced, only the portion necessary for processing can be reproduced. When the invention is applied to three-dimensional space display, a continuous broad space can be reproduced as a space in which only necessary portions are continued. When the invention is applied to an object-oriented programming, all the objects are reproduced if vacancy exists in a main memory, and a request can be made to the objects of another computer if no vacancy exists.

## Description

### Technical Field

### 〈Section 1 Technical Field〉

This invention relates to methods, apparatuses and data structure of object management, in the field of the object-based technology.

### Background Art

### 〈section 2 Former technology〉

### 〈section 2 . 1 Object-oriented programming〉

C++ language was developed in an intention which to support object-oriented programming. It prepares the template of an object called a class and secures a memory called an object by using new command. However, the specification of C++ language does not refers to the mechanism of retaining objects. Using C++ language actually, one realizes how difficult it is to retain objects made by it. It is also difficult to retain a pointer that indicates object, since a pointer is an address of memory, to which the object was allocated. Even if the address of memory is retained, there is no guarantee that it will match-up with an address of an object reproduced when the computer is invoked at the next time. This is same in C language.

Language specification of C++ was set hypothesizing transforming C++ program into a program of C language once. Therefore the problem of C++ language program is also a problem for program of C language. Yet, there are in spite of being many program languages that can be used to object-oriented programming, a language which considered to retain an object and a pointer cannot be found. Retaining necessary data by finding a device in each application is the actual situation here and general method to retain an object and a pointer cannot be found.

It mentions 14 pages in the heading of "Object-oriented database", Nikkei Intelligent System, Separated volume, Nikkei BP Company, 1994, that it is "object-oriented database (OODB) appeared so that application object that applied object pointing technology and developed was retained perpetually". Object-oriented database will retain not only the object but the relationship between objects also. However object-oriented database is expensive and is not realistic to use in a program of all object-oriented.

For example, the price of a product introduced as a product of top share in U.S. in the above-mentioned book (pg. 158-159) in Japan is; for execution version server of UNIX 804,000 yen, for execution version client about 293,000 yen, for execution version (for client for server) for a personal computer is 182,000 yen. Moreover, the development version is much expensive. It becomes 232,000 yen in a total to combine 50,000 yen software with a cheapest execution version of personal computer. The 78 % of the price of this software is occupied by the price of object-oriented database.

The effect will be big, if it can retain an object and a pointer by a simple device. For example, it will be 2,500 yen in the case of 50000 yen software, if 5 % of product price is paid as ordinarily license of a patent. It is 52,500 yen even if it is added to the product price, so in comparison with the 232,000 yen product the strength of price competitive power is obvious.

Also, time basically costs to the process in object-oriented database in order to investigate the content of all the object that satisfies a specific condition, since basically all objects has to be search. When generating a object group before hand to avoid this requires a process and memory.

Retain an object and a pointer data, a simple and shaped method is required.

### 〈section 2 . 2 Web browser〉

If the object and the pointer data can be wrote on a file, it can be transmitted to other computer by the same method with communications line. The computer that received the data can make a copy of an object and a pointer.

Today, we can access to any world's data by Web browser in the Internet. Java is being developed to this Web browser in order to give a movement. The details are introduced in "Presenting Java" by John December, Sams.net Publishing, 1995, (translated by Matuda Shouichi, Prentice Hall Japan, 1996). A program described in Java language is transformed to byte cord and this byte cord is distributed to give a movement to Web browser (HotJava) of Java correspondence of each site (a computer). However, Java language does not support a pointer. That is, an advanced application that generates plural objects and express the complex relationship between those by a pointer cannot be made possible in Java,

An advanced function can be realized in the Web browser if the data of an object including pointer data can be transmitted to other computers and be reproduced there.

### Disclosure of the Invention

### 〈Section 3 The retain and the playback of an object, part 1〉

To retain an object, one can write out the content data of the main memory object to a storage medium. This storage medium is a medium which retains data temporary or permanently. For example, there are magnetic disk, magnetic tape, floppy disk, record-able CD-ROM, memory holding type memory, and so on. Sometimes it is called as secondary storage medium or external memory medium as a contrast to main memory medium. Also, there are cases which it transmits to a different computer and have the computer hold the data. It is the same on either case to write out the content data of the object.

The object includes values such as integer or real number, character string, pointer, and so on. Content data of object other than pointer shall be written out to storage medium as it is. Sometimes, an object is moreover included in an object. For example, C++ defines a new class and use the object of the class as (object's) variable of another class. In a case where an object is included in a content data of an object, the content of the included object is written out.

To playback an object by the data invoke in the storage medium or external data (from communications line or from user interface), first generate an object from a class which is a template of an object. If it is C++, class X{}; the object of class X is generated at X* NewObj=new X; and the memory address (top address of the main memory where an object was secured) will be set to NewObj. After that, it reads-in the invoke data in the storage medium and set the value to the object's value. Even if the memory address is different from when it was written out, the content is reproduced just the way it was.

If the template of an object, namely, a class is understood before reading the content recorded in storage medium, it will be possible to carry out above-mentioned procedure. There will be no problem if the class of an object which retains and playback is one kind. Also, there will be no problem if the class assignment of the object which will be generated in logic of the program, is set. This is, for example, a case where a class of an object to be generated is assigned by a code of the program for each of group of data from the storage medium. There would not be any problem, because the class of an object to be included is indicated in the class definition in the case when moreover an object is included in an object.

A device to retain and reproduce an object when there are plural class of an object to be retained and reproduced, and the assignment of the class cannot be set in the program's logic, will be explained in section 5's "The retain and the playback of an objet, part 2".

An easy case of retain playback method of a pointer will be shown in section 4. More complex case of retain playback of a pointer will be shown after section 6 and section 11.

And yet, to write out the data of an object to the storage medium is the same thing as displaying the data of the object to display unit of a computer or as to transmit the data of the object to outside by a communications line. Also, to playback an object from the data of an object wrote in the storage medium is the same thing as generating an object by using a file data generated by an editor, data from the computer's input unit or data obtained from outside by the communications line.

### 〈Section 4 Problems of the pointer retain playback and an easy case of a pointer retain playback method〉

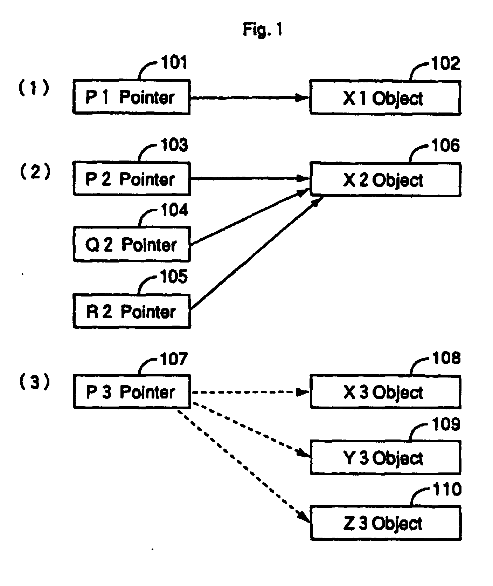

It becomes the following three kinds if to classify a case which a pointer is used. First, a case where as figure 1(1) shows, pointer(P1 pointer 101) and the object(X1 object 102) corresponds to each others. In this case, the content data of X1object 102 should be outputted instead of the memory address of X1 object 102 set at P1 pointer 101. To playback a pointer, generate an object and set that memory address to P1 pointer 101. And then set the content of X1 object 102 just read-in from the storage medium to a variable of the object just been made. This method will playback P1 pointer 101 that points X1 object 102.

The second case is where plural pointer indicates single object. In figure 1(2), all P2 pointer 103, Q2 pointer 104 and R2 pointer 105 shows X2 object 106. In this case, writing out the content data of X2 object 106, and which pointer to correspond to the work to playback becomes the problem. If allocate P2 pointer 103, the value that is the memory address of X2 object 106 has to be set to Q2 pointer 104 and R2 pointer 105, also. Meaning, it analyze the construction of an application program and realize the procedure to retain playback the pointer data of that application.

If there is a case where a part of P2 pointer 103, Q2 pointer 104, R2 pointer 105 does not indicate X2 object 106 even if there is a possibility of them indicating X2 object 106 as the application procedure progress, the retain playback method of a pointer data becomes more difficult. Writing out the content data of X2 object 106 and deciding which pointer to correspond to the playback work has to be switched in each situation. Ahead that sets memory address of an object which also, playback changes by situation, too. Also, it must deal with a situation when no pointer indicates X2 object 106.

The third case is a case where a single pointer indicates plural objects. Figure 1(3) shows the possibility of P3 pointer 107 indicating X3 object 108, Y3 object 109 and Z3 object 110. The type check in C++ language is strict, but if we can make P3 pointer 107 type as the ancestor class of X3 object 108, Y3 object 109, and Z3 object, there will be no problems with the type check and these three class's object can be shown. Also, if type of P3 pointer 107 is void* type, P3 pointer 107 will be able to make sets the address of the object of an optional class.

It is easy to write out the content data of object appointed by P3 pointer 107 to a storage medium, but when reading in and replaying it, the object's class cannot be specified. That is, pointer data cannot be playback.

A problem becomes moreover complex in situation that the second and the third situations are mixed.

Also, in a case where object A pointer indicates object B, object B pointer indicates object C and object C pointer indicates object A, it will be difficult to decide which object to invoke playback.

Retain playback method of a pointer corresponding to the second, the third and the mixed situation mentioned above will be shown after section 6 and section 11. This, as it is explained after, transforms a pointer to a combined character string and writes out and retains to storage medium. And playback the pointer using this data.

### 〈Section 5 The retain and the playback of an object part 2〉

The method of section 3 cannot be used if there are plural object's class and cannot be fit into appointing the logic of the program. Then, "procedure which writes out the class identifier of an object" is introduced in addition to "procedure which writes out the content data of an object". That is when writing out the content data of an object, it also writes out the data that designates the objects template meaning the class.

When reproducing an object, generate an object based on the class identifier read-in from the storage medium and then set the content data of the object read- in from the object. This is equal to claim 2. Other than this, claim 2 procedure can be used to playback (or generate) an object for cases like; reading-in storage medium's file generated from the editor, receiving class identifier from outside by a communications line or the object's content data, or data inputted from operator by input interface.

Yet, to simplify this playback procedure, it is convenient to record the class identification of the object first and then the object's content data. However, even if the turn is reversed, it can correspond if the object's content data is shunted for a moment on the side of read-in. Also, it is possible to record class identifier and content data of an object to a different file (of a storage medium) and generate a read-in program corresponding to this.

### 〈Section 6 Retain playback possible pointer〉

There is no meaning to retain the value of a pointer since it is the memory address. So here, we have come up with an idea to transfer a pointer to a retain possible data and oppositely transfer the data to a pointer. Retain possible pointer is accomplished by this. This is explained in the following.

### 〈Section 6 . 1 Object tree〉

Management method of an object must be devised in order to accomplish retain possible pointer. The memory address is the only method to access after generating the object. Even when generating an object by new command or when securing memory by malloc command, the command's return value is the memory address. In this invention, the memory address is accommodated in the set of an object. It can access the target object by tracing the member of the set.

The constitution method of the set where accommodates an object will be good if an object can obtain access. That is, to accomplish as constitution method of the set where accommodates an object is good by any of simple list, BI-direction list, array, hashed array, binary tree, bag, stack, queue and dictionary (set of association), and etc. Here, hashed array is an arrangement (array) of a list in the order of hash number which accommodated the object of the same hash number. Yet, "object identifier" (section 6.2) can be used to find the target object.

The object which controls the set of an object is called "management object", and it corresponds to a set of management subject. In reality, the address of a list head that indicates the top of the set of an object is set to a pointer valuable that the management object holds. This is equal to claim 4 [a]. By repeating this can accommodate object to a tree-like shape. This is called "object tree".

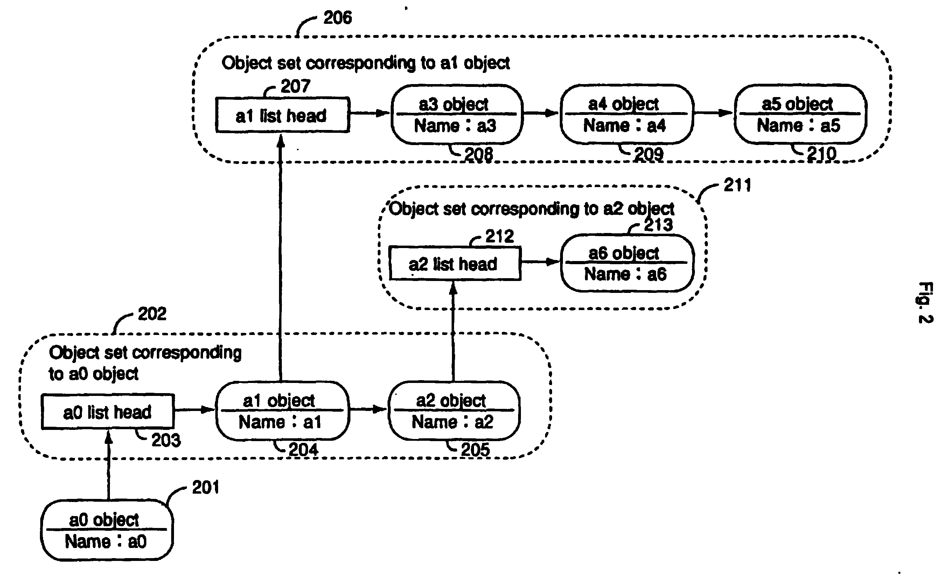

Examples are shown in figure 2. A0 list head 203 corresponds to a0 object 201. A0 object 201 sets an address of a0 list head 203 to a pointer (as a variable) in order to express this. In the following, in saying that it is a list head corresponding to an object, it means the address of list head is set to a pointer which an object has. A1 object 204 and a2 object 205 are accommodated to a list that a0 list head 203 is the top. This is the set of an object 202 corresponding to a0 object. A1 list head 207 corresponds to a1 object 204. A3 object 208, a4 object 209 and a5 object 210 are accommodated to the list that this tops. This is the set of an object 206 corresponding to a1 object 204. A2 list head 212 corresponds to a2 object 205. A3 object 213 is accommodated to a list that this tops. This is the set of an object 211 corresponding to a2 object 205.

Minimum constitution of object tree is one level. That is, an object tree composed of only the set of an object 202 corresponding to a0 object 201, and a0 object 201 is an example of minimum constitution.

Also, the constitution of tree is 2 steps in figure 2, steps can be increased as necessary. And, an object tree constitution that omitted the set of an object 211 corresponding to a2 object, that is constitution that steps differs by the branch of tree is also possible.

In claim 5, it includes multiple step object tree is possible to generate by "a procedure which makes management object a member of the set" in it. The claim 4 does not include this condition. Which means that the claim 4 subjects a case where only one step can be generated. However, a case which simply accommodates an object to a list is excluded from demand subject of claim 4 because of putting an object which controls list correspond into the condition of a demand.

### 〈Section 6 . 2 Object identifier〉

The data to identify the object is set to an object which will be accommodated in an object tree. This is called object identifier. It can be a character string (ex. name of an object) or a figure. It can use a variable already defined as object identifier or introduce a new variable as object identifier and set a character string or a figure.

A specific object can be assigned by giving a unique name of the set of an object as object identifier to an object by a combination of object identifier. In the example of figure 2, object identifier has a name (character string) given to an object. A5 object 210 can be specified by (a0, a1 and a5).

In the example of figure 2, the name of an object is most unique in the whole object. However, to designate an object in the combination of object identifier, you can use the same name in different set of an object. For example, even if the name of a6 object 213 is changed to a5, a5 object 210 at (a0, a1 and a5), and a6 object 213 at (a0, a2 and a5) can be specified, so a5 object 210 and a6 object 213 will not be confused.

There are some cases where you can use the same object identifier (name in figure 2) in a set of an object. In this case, plural objects that can be specified in the combination of object identifier exists. It is permitted to deal the plural object always the same, by the purpose of an application, or by the design principle.

When assigning an object inside the object tree of figure 2, the assignment of character string a0 can be omitted since it always invokes assigning from a0. For example, a5 object 210 can be specified at (a1, a5). It is possible moreover, to omit a0 object 201 itself. However, a0 list head 203 corresponding to a0 object 201 must be left.

A procedure which was explained in this section, that is to set object identifier to an object, is claim 4[b].

### 〈Section 6 . 3 Retain playback of a pointer〉

Designating an object by a combination of object identifier was shown. If there is a procedure to transfer a pointer to a continuation of object identifier, pointer data can be retained by a procedure to write out continuation of object identifier to a storage medium. This is claim 6.

Also, retained pointer data can be transferred to a pointer if there is a procedure to designate an object from a combination of object identifier. This is claim 4[c].

Furthermore, in claim 4 or claim 5, "procedure which transforms a pointer into a continuation of object identifier" (necessary in order to retain a pointer) is not included in the range of the demand. Even if the pointer data is not retained, the use to set a purpose pointer is possible by writing-in and reading-in a continuation of object identifier as a pointer data by an editor to a file in the storage medium. It is also possible to transform a continuous object identifier inputted from an operator through input interface or continuous object identifier that received from a communications line, to a purpose pointer.

### 〈Section 6 . 4 Efficient search〉

Time basically costs to the procedure in object-oriented database when investigating all objects which satisfies a specific condition, because all the objects has to be searched. To avoid this, there are methods to set a "relation" between objects that satisfies few requirements and generate object group to be investigate beforehand. However, these methods require procedure and consume memory.

On the other hand, an object is accommodated in an object tree in this invention. If an object with high possibility to become a range of investigation is collected to a set inside of an object tree once, the search will become easy. In order to investigate an object accommodated in the set of an object 206 corresponding to a1 object of figure 2, designate a1 object 204 with combination (a1) of object identifier and designate corresponding a1 list head 207. And then, trace the object from a1 list head 207 sequentially. A point which the mechanism that accommodates an object can be used in order to limit the range of a search as the point where it is excellent in comparison with object-oriented database. It is possible to efficiently search with no excess procedure to a search and the memory comparison with object-oriented database that hypothesized general usage.

Collecting objects of a high possibility range of one investigation to a single set becomes a key to accomplish a simple and efficient (high speed) search. Most of the times, it is easy to find objects of a high possibility rage of one investigation by analyzing the application structure.

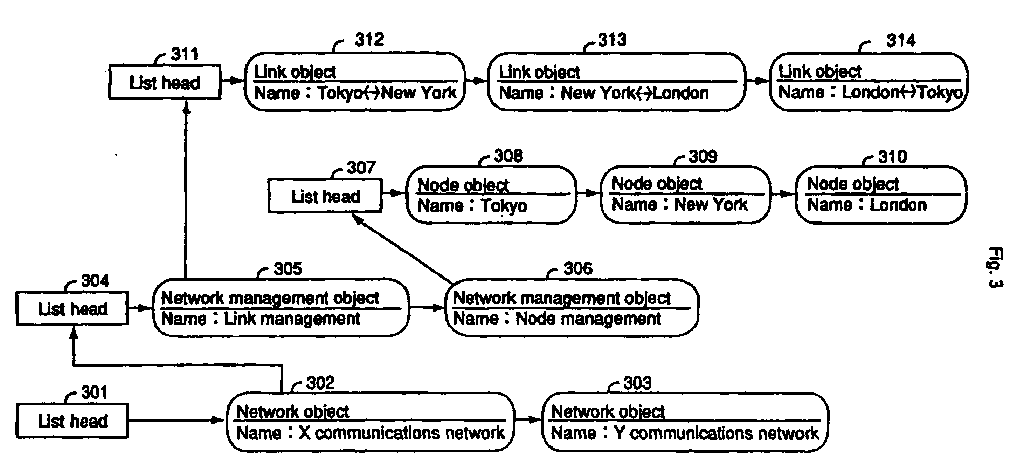

For example, most of the times in applications that deal a model of a communications line, the communication link of assigned communications network are searched thoroughly in turns. There are many those that also, search all communication nodes of a communications network in a turn. An example that collected each of them in a set is shown in figure 3. The list head 301 accommodates Network object 302 named as "X communications network" and Network object 303 named as "Y communications network". The list head 304, that is corresponding Network object 302, accommodates Network management object named as "Link management" 305 and Network management object named as "Node management" 306. The head 311, that is corresponding to Network management object 305, accommodates Link object 312 named as "Tokyo <-> New York," Link object 313 named as "New York <-> London" and Link object 314 named as "London <-> Tokyo." The list head 307, that is corresponding to Network management object 306, accommodates Node object 308 named as "Tokyo," Node object 309 named as "New York" and node object 310 named as "London".

When investigating all link objects of X communications network, first, network management object 305 of name "Link management" is identified by combination ("X communications network" and "Link management"), and then corresponding list head 311 is designated. After that, link objects follows to this list head are investigated in order.

When investigating all link and node objects of X communications network, first, Network object of name "X communications network" is identified by combination ("X communications network"). Then network management objects and objects contained in them are all investigated.

When searching link objects of all communications networks, the procedure can trace the object tree by Depth First Search. When network management object of "Link management" is reached, the corresponding object set is investigated. And the search moves to the next branch. When network management object of "Node management" is reached, the search for this branch is skipped.

### 〈Section 7 Retain playback of an object〉

In section 4, as a case of an examples where it is difficult retain playback of a pointer; plural pointer indicating one object (figure 1(2)), one pointer indicating plural objects(figure 1(3)), mixed case of both, were shown.

However, by introducing an object tree, the retain playback of a pointer became possible in such cases. Therefore, the data of an object including a pointer became fully possible to retain playback. So, adding the ideas of section 6 "retain playback possible pointer" to section 3 "retain and the playback of an object part 1", section 4 "a easy case of a pointer retain playback method", and section 5 "the retain and the playback of an object part 2", the data of an object are possible to retain playback a hundred percent.

To retain the data of an object, write out the data to a storage medium file by the procedure mentioned above. Using the same procedure, displaying the data of an object to a display unit of a computer and transmitting the data to outside by a communications line can be done.

To playback the data of an object, read-in the data from the storage medium file and then generate an object. At this time, object tree is playback, too. By the same procedure, object can be generated by using; file information generated by an editor, data from the input unit of a computer, and data obtained from outside through a communications line.

There are some cases where the pointer data expressed by a continuation of object identifier cannot be transformed to a pointer if the object tree is still under construction. When the object of an object tree holds a pointer, first of all it playbacks the object tree. After that, it retains and playbacks the pointer data expressed by a continuation of object identifier to a pointer in a bundle, then a high speed access of the process later by a pointer can be possible.

There is another method such as to transform the continuation of object identifier into a pointer when the pointer becomes necessary. Preserving the pointer, a high speed access by a pointer is possible since then.

### 〈Section 8 Functional addition〉

A moreover high degree faculty can be accomplished by making above-mentioned device as a base. This is shown below.

### 〈Section 8 . 1 Simple virtual memory〉

If the data of an object recorded in the storage medium are all read-in to the main memory, the consumption of the main memory becomes massive and it becomes a problem. To improve this, there is a method to read-in the data of the set of an object only when it is needed.

For this, in the procedure to playback an object by reading-in the content data of an object, a procedure that transforms a pointer data (that is, a continuation of object identifier) which points a different object will not be enforced at the time of read-in. If it tries to transfer the continuation of object identifier to a actual pointer when it becomes necessary, and if it comes to surface that the set of objects ((controlled by management object) does not exist in the main memory in the procedure, the set will be developed on the main memory.

After developing an object to an object tree and designate a necessary object, it holds a pointer to the object. Thereafter, a high speed access will be possible if this pointer is used.

A simple virtual memory can be made if the set of data of an object of low frequency is wrote out to a storage medium and the main memory is set free, when the amount used of a main memory over the limit.

Yet, for the above process, it is better to separate the recording file for each of the set of an object. However, if a process that skips the unnecessary part is introduced, even if the files are the same, it will be able to correspond.

The details are explained in "realization of simple virtual memory" of section 11.9.

### 〈Section 8 . 2 Correspondence to data dispersion〉

If a computer is connected by a communications network, data are held dispersal on plural computer, sometimes. A copy of an object shall be sent and generated to a computer that needs data from a computer that holds data. This can be seen as simple virtual memory that replaced storage medium (a file also) in an explanation of section 8.1 to another computer.

It copies the data of an object to a computer which needs data and generates a copy of an object to an object tree. If the copy of a necessary object is specified, it will hold a pointer to the object and thereafter by this high speed access will be possible.

The details are explained in "details of correspondence to data dispersion" of section 11.10.

### 〈Section 8 . 3 Web browser〉

Various kinds of procedure programs were programmed in former web browser to display various data inquired from the network. On the other hand, a faculty which carries out execution file that does not rely to the kind of a computer called byte cord exists to HotJava browser of Java correspondence. For example, if a procedure that displays special format data is wrote on Java language and transformed to a byte code, the byte code will act on any kind of HotJava. If HotJava browser is transplanted to various computers, it acts in various computers by only distributing one kind of the byte cord. It can display an animation in the browser by byte cord. However, since a pointer can not be used in Java language, a faculty to accomplish is restricted.

By the subject invention, it became possible to transmit objects and pointer data by a communications line. If this is programmed in Hot Java browser, it can reproduce the set of an object and a pointer based on the data received from server under Hot Java browser management. If a command which operates this object and the pointer is added to Java language specification, more complex procedure can be accomplished since before.

We will think of an application that generates a blueprint of a communications network as an example. User transmits demanded communications network to server through browser. A high level and complex procedure to generate a blueprint of a communications network in executed by high speed CPU in the server. The blueprint of a communications network as the result is expressed as the model of a communications network. Communications node and communications link are expressed in an object and those relation are expressed at a pointer in this model.

In this server, the data of communications network's model are wrote out by the subject invention's method and transmitted to user side browser with byte code of evaluation procedure. Byte cord that reproduces the model of a communications network and which it evaluates is invoked in browser on user's side. When user transmit the indication of an evaluation to the browser, it operates the model of a communications network according with it. For example, it clears the net constitution of a case when a communication node is eliminated or it evaluates the influence of a case when a noise occurred frequently in specific communication link. That is, it becomes possible to carry out various evaluation from user's viewpoint by user's computer.

A pointer cannot be used in Java language specification, for a safeties reason of the system. If a transmitting program through a communications line can be accessed by a pointer to any address, it will become possible to brake or reconstruct important data. However, only pointers corresponding to an object accommodated in object tree can be reproduced by this invention's reproduction method. Therefore this invention is not to lose safeties of Java.

One of utilization example of this invention was explained in above faculty expansion of Hot Java as a premise. If functional expansion of Hot Java is difficult, we can consider to invent a better functional web browser than Hot Java.

### 〈Section 9 A correspondence with the claims〉

In claim 2, an object is generated based on class identifier read-in from outside and set object content data read-in from the object to it. By this, it became possible to generate various objects of class and the content based on data from outside.

As examples of data from outside other than data recorded in the storage medium, there are file data generated by a editor, data from outside through a communications line and data from operator through input interface.

Claim 1 is rate concept of claim 2 and it only has " procedure to generate an object read-in from class identifier" as a requirement of a demand. Only the class of an object is important data here and the content is retained or a case not necessary appointed from outside is in the range of demand.

Claim 3 is what the class identifier and a procedure that outputs object content data added to claim 2. Both the retain and the playback of an object becomes possible by this.

Claim 4 first assigns a procedure which is to become a base to generate an object tree by [A], [B]. To give the pointer data as combination of object identifier becomes possible by this. If the combination of object identifier was moreover given by claim 4 [C], a combination becomes possible to transform this into a pointer.

Since claim 4 has not assigned claim 5's "procedure to make management object as member of a set", it includes a case which it only can generate one level of the object tree in to the range of demand. However, a case where simply accommodates an object to a list is excluded from the demand subject because in claim 4 [A], it has the list to correspond with the management object in its requirement of demand.

Claim 5 adds a procedure which can generate an object tree with two levels or more to claim 4 as the requirement of demand range.

Claim 6 is the one which added "procedure to transform a pointer into the continuation of object identifier" to claim 5. Which means, it has required a procedure which can transform a pointer to a suitable data to retain for the demand range. The retain and the playback of a pointer became possible by this.

Claim 7 synthesized claim 6 and claim 3, and made retain playback of objects of various classes and retain playback of a pointer possible.

Claim 8, claim 9, claim 10, claim 11, claim 12, claim 13 and claim 14 each expressed object management method of claim 1, claim 2, claim 3, claim 4, claim 5, claim 6 and claim 7 in object management unit.

In addition to the write out of data, there are no requirements added to any of the write outs of the storage medium, display of display unit, notice to outside through communications line and others. Also, for read-in of data, there are no requirement added to read-in source in such of read-in from the storage medium, data from the input unit of a computer, data form outside through communications line or others.

### Brief Explanation of the Drawings

### 〈Section 10 Brief explanation of the drawings〉

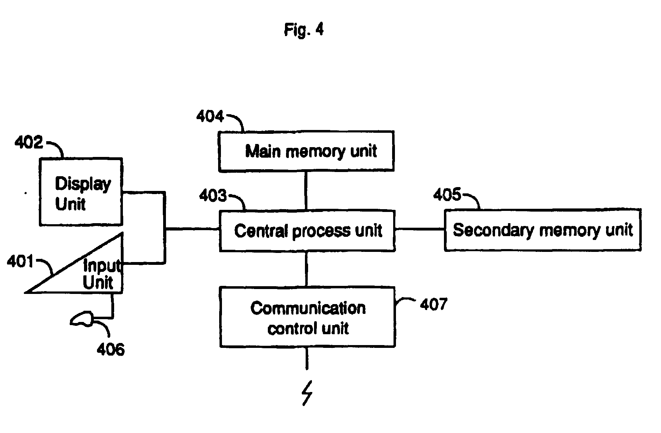

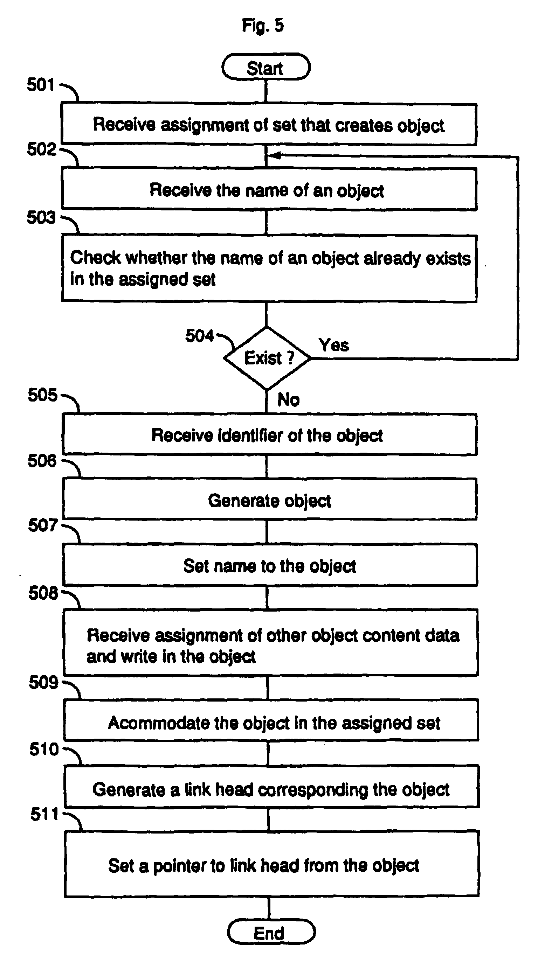

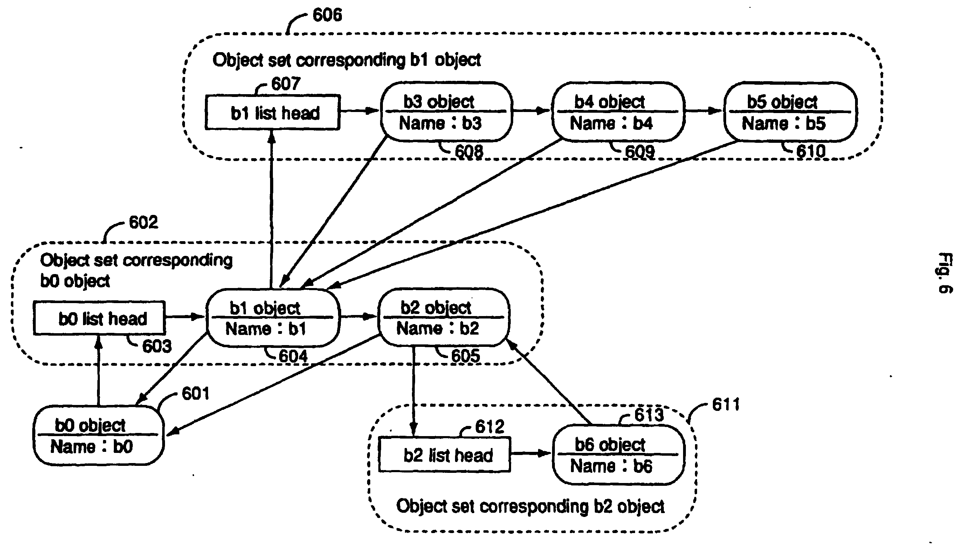

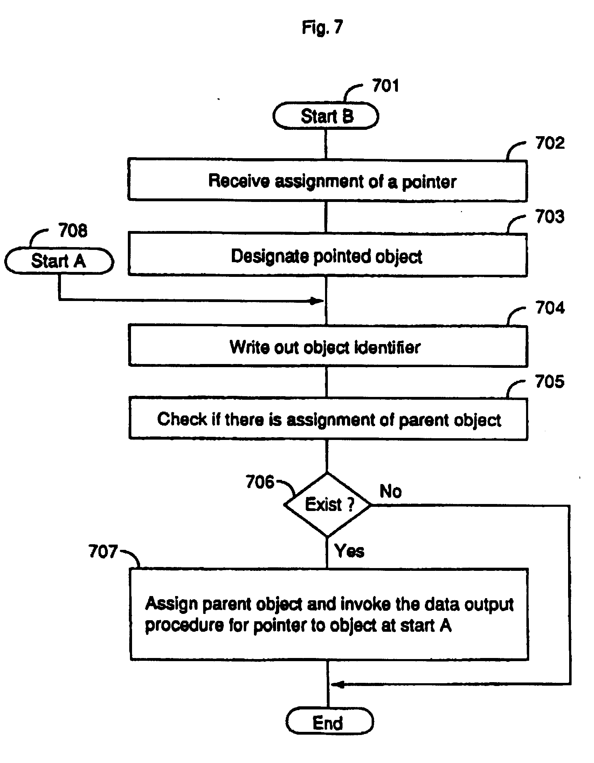

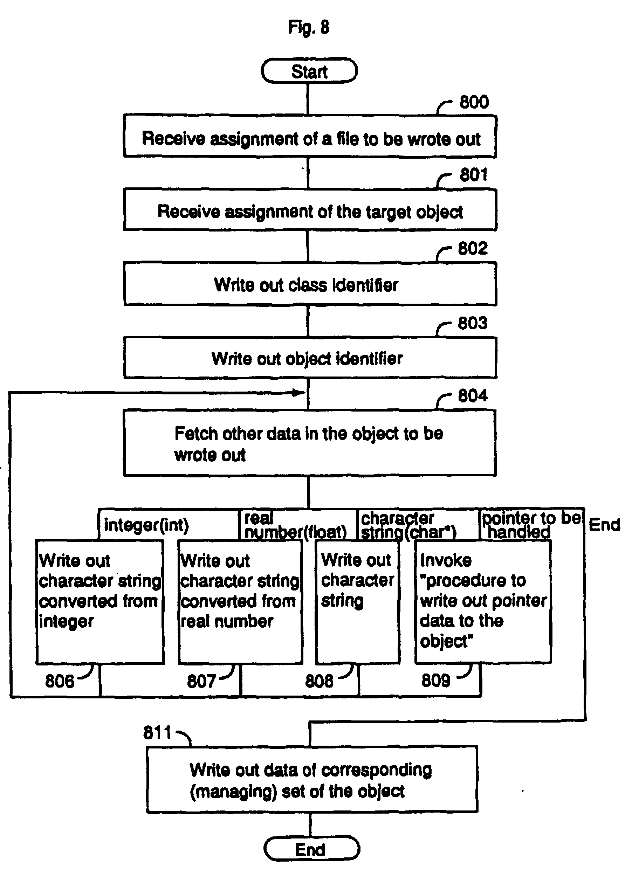

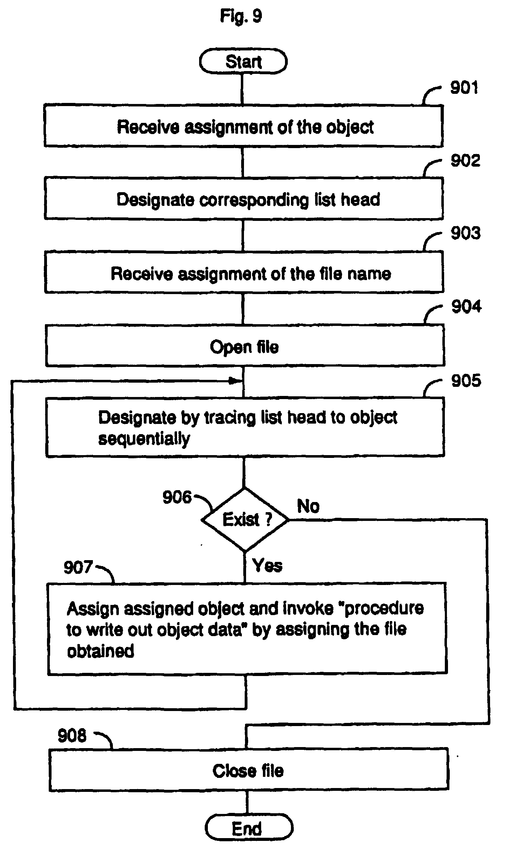

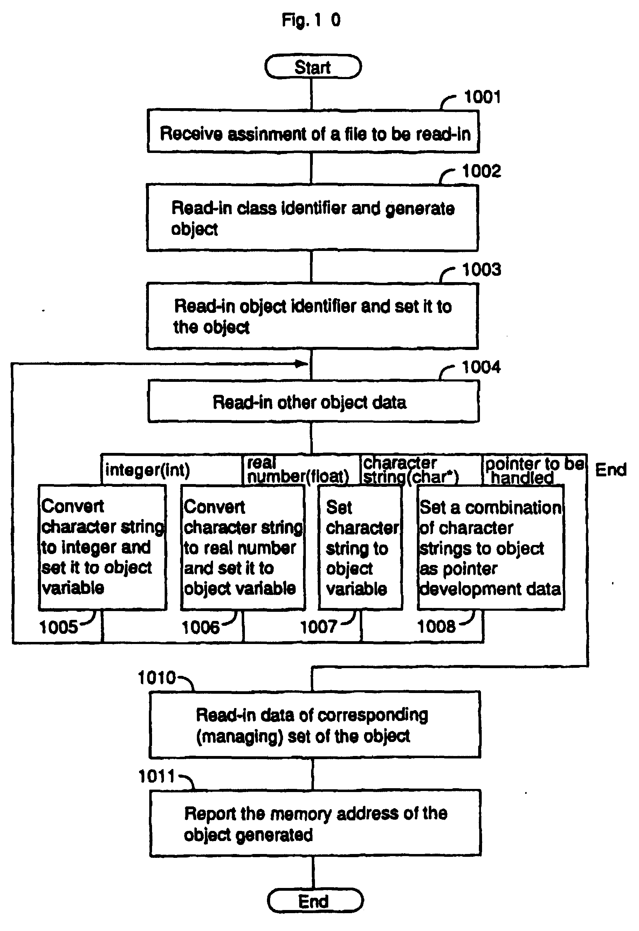

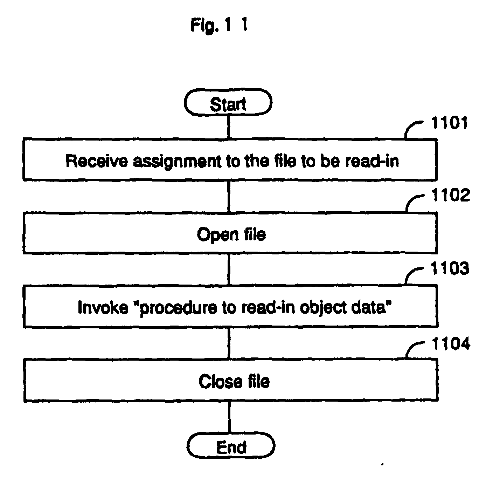

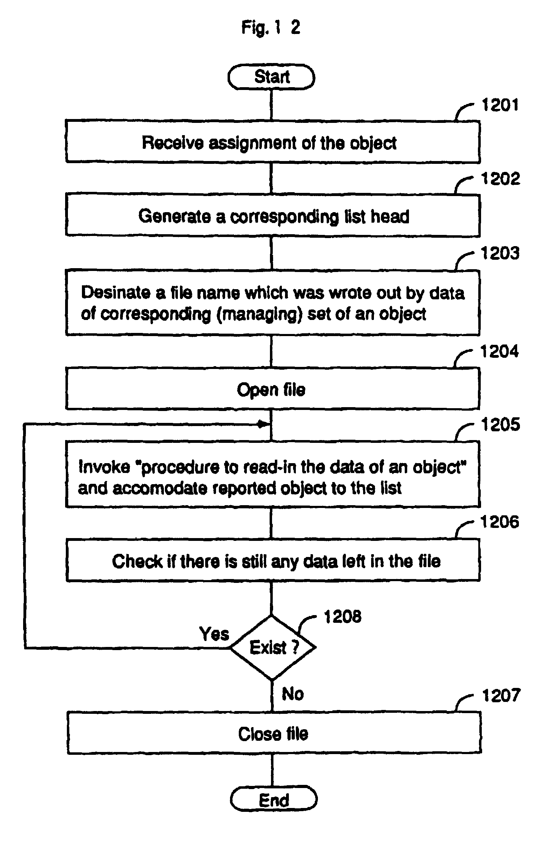

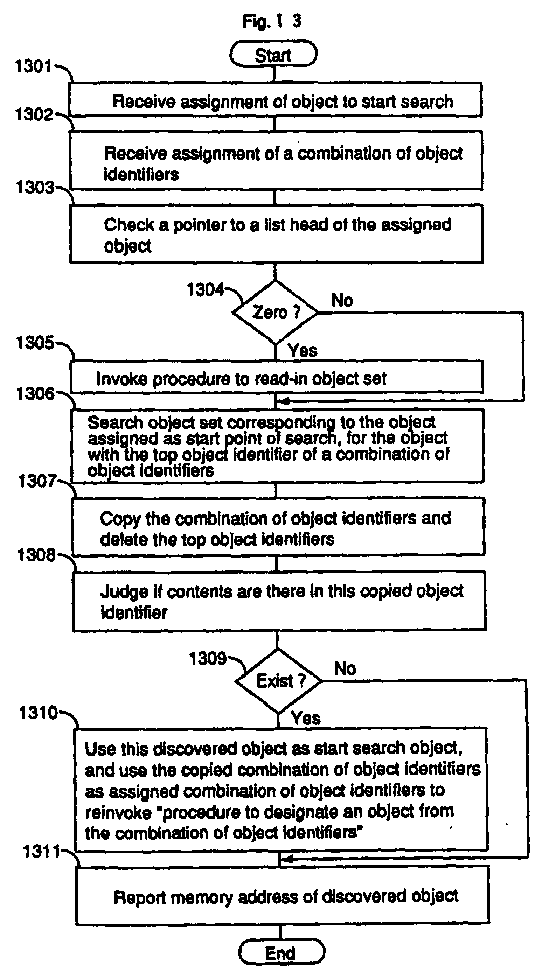

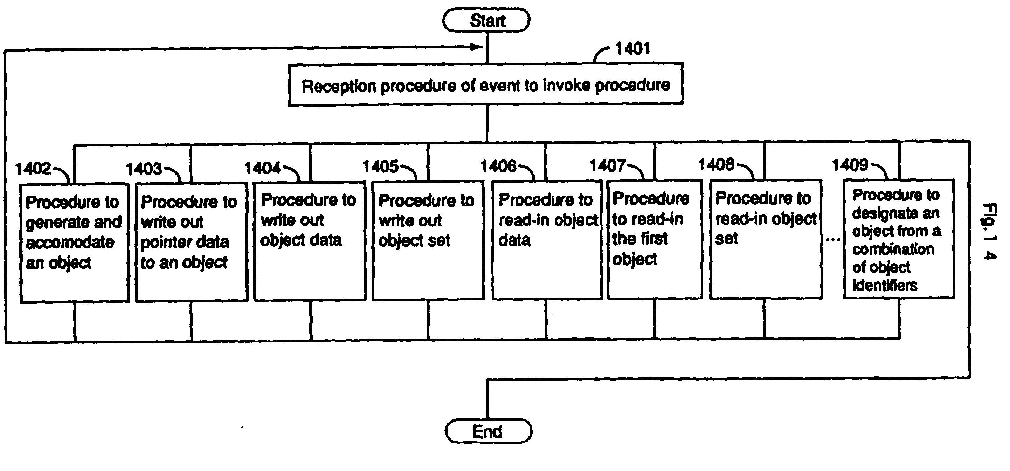

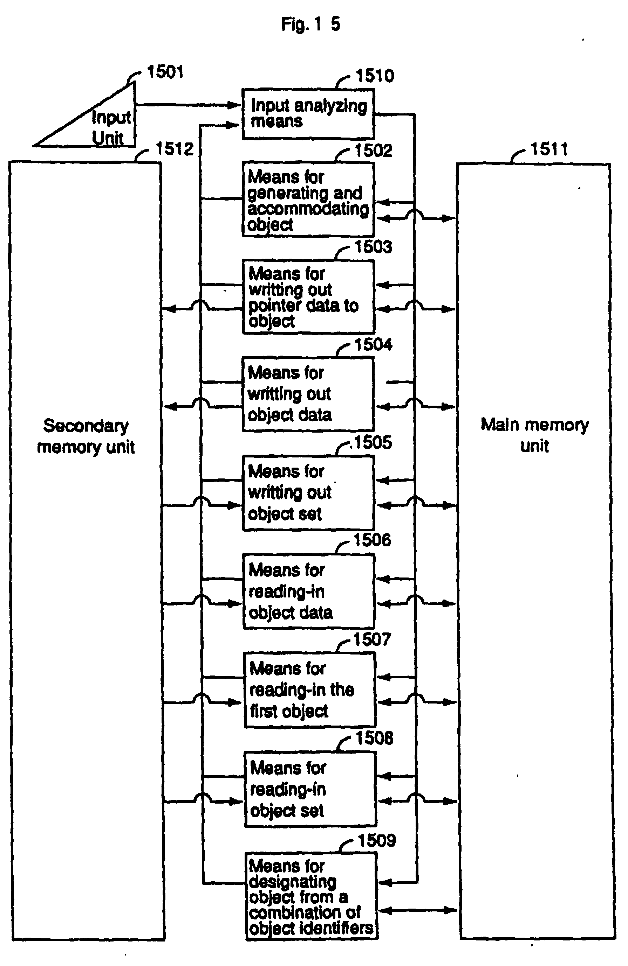

Figure 1 is an example of various use of a pointer. Figure 2 is an example of an object tree, part 1. Figure 3 is an example of an object tree, part 2 (an example which accommodated constitution element of a communications network to an object tree). Figure 4 is a general constitution of a computer which makes a program run that accomplished object management method. Figure 5 is a detail of "procedure to generate arid accommodate an object". Figure 6 is the example of object tree to explain figure 7. Figure 7 is a detail of "procedure to write out pointer data to an object". Figure 8 is a detail of "procedure to write out the data of an object". Figure 9 is a detail of "procedure which writes out the set of an object". Figure 10 is a detail of "procedure which reads-in of the data of an object". Figure 11 is a detail of "procedure to read-in the first object". Figure 12 is a detail of "procedure to read-in the set of an object". Figure 13 is a detail of "procedure to designate an object from a combination of object identifier". Figure 14 is a constitution example of a program which accomplished object management method. Figure 15 is a realization example of a unit equal to a program of figure 14.

### Best Mode for Carrying Out the Invention

### 〈Section 11 Enforcement mode of object management method〉

As an enforcement example of object management method, there is an enforcement example that accomplishes as the program of a computer. A general constitution of a computer is shown in figure 4. The instruction inputted from 401 input unit is analyzed in central process unit 403 and carries out the indicated procedure. As a result, an object is generated on a memory (main memory) of main memory unit and adding to that, a value is set to a pointer of the object.

The data of an object of main memory unit 404 and pointer data are wrote out to a storage medium of secondary memory unit 405. Also, sometimes it is displayed on display unit 402 or transmitted to another computer through communications control unit 407.

Controversially, central process unit 403 reads-in the data of an object that secondary memory unit 405 hold and the pointer data, and objects and pointers correspond to these data are set to main memory unit 404. Also, objects or pointers are set in the main memory unit based on data form input unit 401 or data from different computers through communication control unit 407.

### 〈Section 11 . 1 Procedure to generate and accommodate object〉

Procedure to generate and accommodate an objectwhich is a procedure that generates an object and accommodates in the set of an object is showed in figure 5. Details of procedure to generate and accommodate an object is explained assuming a case which adds a2 object 205 of figure 2 below. That is, hypothesizing a situation where no set 211 of an object corresponding to a2 object 206 and a2 object exist and explains an object of name a2 as an example of a procedure to add there.

First "receive assignment of set that creates object" 501. To assign the set of an object 202 which corresponds to a0 object of figure 2, assign combination of object identifier (a0). Receiving this assignment, designated a0 object 201 and then designate a0 list head 203. This list head is used as assignment for set in the below procedure.

Next, "receive the name of an object" 502. This is the name, which is the case when uses character string as object identifier. To generate a name for a2 object 205 of figure 2, receive the name "a2". A figure can be used in addition to this, using a figure. The procedure "check if the object's name already exist in the assigned set" 503 can be realized by comparing assigned name and the name of an object by going through the object's turn from the list head. Also, if the set is a hashed array, it will be able to make only objects which hash numbers are common to the subject of investigation. If the name already exists as a result of this investigation, it will return to "receive the name of an object" 502. If it comes to surface as a new name, it succeeds and it moves to "receive identifier of the object" 505. If the object to be generated is one kind or the object to be generated is specified by a code in the program, it can omit "receive identifier of the object" 505.

Generate an object based on the assignment of object's class. This is "generate object" 506 procedure. Setting the name received in "receive the name of an object" 502 procedure is "set name to an object" 506 procedure. The name "a2" is set in an example of figure 2 to a2 object 205. This is equal to "procedure which sets object identifier to an object" of claim 4[b].

The object usually has a variable such as integer, real number, character string and pointer besides object identifier. Also, it sometime has another object inside an object. Some of these the of an object are set when generating an object (sometimes no cases according to the application). Setting this "receive assignment of other object content data and write in the object" 508.

And it "accommodate the object in the assigned set" 509. In the example of figure 2, it accommodates object generated newly in last of the object connected to a0 list head 203. If there are no set of an object managed by this object, the generation accommodation procedure of object can be finished.

Next, "generate a link head corresponding the object" 510. And "set a pointer to link head from the object" 511. In the example of figure 2, generate a2 list head 212, and set memory address of a2 list head 212 to a pointer that a2 object 205. Now, the preparation to accommodate an object in future is done. Although there is a method to have object itself as a link head, it is desirable to have link head out side of the object to adjust with "correspondence with data dispersion" of section 8.2. It is possible to make tip of the link head as an another computer.

"Generate link head which correspond to object" 510 procedure and "set a pointer to link head from the object" 511 procedure correspond to "procedure which makes the management object correspond to the set of an object" of claim 4[a].

Objects accommodated in the procedure of "accommodate the object in the assigned set" 509 are management objects, that is objects which holds pointer indication link heads. Therefore this procedure is equal to "procedure which makes management object a member of a set" of claim 5.

### 〈Section 11 . 2 Procedure to write out pointer data to object〉

A procedure to write out the pointer data to an object accommodated in object tree is showed in figure 7. Figure 6 is used in order to explain the details of this procedure. The structure of object tree of figure 2 is same as for figure 6. By looking at it from each objects, the management object of a set where accommodates the object is called "parent object". A point which has been set a pointer to the parent object from an object differs from figure 2 in figure 6. Also, to distinguish from figure 2, all names in figure 6 invokes with a "b".

If there is no need to write out the pointer data to an object accommodated in the object tree, a pointer to the management object from the object is not necessary. However, to write out the pointer data on the basis of a pointer to an object, it will be better to have a pointer to the management object from the object. In the write out procedure of the pointer to the object explained later, a existence of a pointer to a management object to an object is a premise.

The "procedure to write out pointer data to an object" invokes from start B701. First of all, "receive assignment of a pointer" 702 and "designate pointed object" 703. For example, let's say b5 object 610 of figure 6 is assigned. Details of this example is explained in the following.

Next, "write out object identifier" 704. Character string b5 of a name of b5 object 610 is outputted in the example of figure 6. Division mark with another character string is outputted after this. Line feed mark, tab mark and 0 cord can be used as division mark of the character string. An example which made line feed mark as division mark is shown in the following.

Next, "check if there is assignment of parent object" 705. B1 object is assigned to the parent object of b5 object. At this time, "assign parent object and invoke the data output procedure for pointer to object at start A" 707. That is, assign b1 object and invoke the same procedure from start A708 to a recursive. As a result character string b1 is outputted.

Furthermore, assign b0 object and invoke the same procedure from start A to a recursive. As a result, a character string b0 is outputted. In b0 object, the result of "check if there is assignment of parent object" 705 is "No". Which means the procedure ends since the pointer to parent object does not point anywhere. Although the combination of object identifier that designates b5 object 610 is (b0, b1 and b5), character string of output result becomes "b5, line feed mark, b1, line feed mark, b0 and line feed mark".

If object identifier is inserted to the top of a combination in reading this character string, the combination of correct object identifier will be obtained. That is, the combination of the object identifier changes (b5), (b1, b5) and (b0), b1, b5) as it reads-in the character string from the top.

Above is equal to "procedure which transforms a pointer into the continuation of object identifier" of claim 6.

### 〈Section 11 . 3 Procedure to write out the data of an object〉

A procedure to write out single data of an object assigned is showed in figure 8.

First of all, "receive assignment of a file to be wrote out" 800. Here, it assumes the opening of a file has already ended and the file pointer given. If the file name is given, a procedure of the opening of a file and closing is necessary as for the case to figure 8.

Next, "receive assignment of the target object" 801. Let's say a1 object 204 is assigned as an example. Designate the class from object's assignment and "write out class identifier"802. In C++ language application, the method to directly take out the data which designate the class from the object is not shown. Defining a function which outputs class identifier to class definition and paging the function from an object are simple and the sure method. For example, the function (ClassName()) that outputs character string "ClassX" as the function of the class in doing a class of a1 object 204 X is defined to the following condition. Class X{ public: void ClassName(){ out put character string "ClassX";} };. When the assignment of target object is given as pt1 (X type pointer), "write out class identifier" 802 procedure is executed. Here, the character string "ClassX is a character string of the original class (different from the class identifier of other classes).

Next, "write out object identifier" 803. Character string "a1" is written out in the case of a1 object 204.

The object is holding data other than the above. However, there is no need to hold all the data. The data to be retained are selected from the purpose of the application and its program constitution. The selected data are taken out by "fetch other data in the object to be wrote out" 804. If it is integer (int), then "transform and write out the integer to character string" 806. If it is real number (float), then "write out character string converted from real number" 807. If it is character string (char), then "write out character string" 808. Although there are letter (char), double real number type (double), double integer (long int) and others as this data type, they are omitted in order to explain easily.

When a pointer to an object of object tree inner part was taken out by "fetch other data in the object to be wrote out" 804, it "invoke 'procedure to write out pointer data to the object procedure'" 809. This procedure is a procedure which explained in section 11.2 and deals only a pointer to an object accommodated to object tree.

Although it is not shown in figure 8, other pointers are possible to be retained by the method explained in section 4 if they are one-to-one relationship with the object like figure 1[a]. Which means, it outputs data of an object indicated by a pointer, not the pointer.

"Fetch other data in the object to be wrote out" 804 procedure takes out specified variable of application's specified object by designating turns of program code. It defines the write out procedure of data as member function of each class and assigns the data of write out target and the turns. That is, the turns to take out and the procedure to procedure it is all programmed. This is simplified and expressed in figure 8. Yet, in the program to read-in the object's data are generated to read-in the data in this turn.

A division mark is necessary between character strings to be wrote-out. Line feed mark, tab mark and 0 cord can be used as division mark of character string. Division mark (for example line feed mark) is written out in "write out character string converted from integer" 806 procedure, "write out character converted from real number" 807 procedure and "write out character string" 808 procedure after writing out character string.

Although it does not show in figure 8, sometimes in addition to this other object is included in the object. In C++, it defines the object of other classes as a variable in the definition of a class. In this case, assign the object and invoke "procedure to write out the data of an object".

Finally, "write out data of corresponding (managing) the set of the object" 811.
As an example, output the content of object accommodated in the set of an object 206 corresponding to a1 object since a1 object 204 is assigned at "receive assignment of object target" 801. The details of this content are explained in "procedure which writes out the set of an object" of succeeding section 11.4.

### 〈Section 11 . 4 A procedure to write out the set of an object〉

A procedure to write out the data by separating files for each of the set of an object, is shown in figure 9. "Simple virtual memory" of section 8.1 or "correspondence to data's dispersion" of section 8.2 were convenient since the data of an object were recorded separately to each file of the set of an object. Figure 9 is corresponding to this.

Here, "write out the data of corresponding (managing) set of the object" 811 procedure of section 11.3's "procedure to write out the data of an object" is a procedure to write out the set of an object of this section.

First of all, "receive assignment of the object" 901. Assign a0 object 210 when writing out the whole object tree of figure 2. A procedure is explained as an example of this in the following. "Designate corresponding list head" 902 from object's assignment. A0 list head 203 is specified in an example.

Next, "receive assignment of the file name" 903. A0.bak is assigned as the file name in the example. And it "open file" 904. It makes "fp" as the file pointer, a result of opening file a0.bak.

If an object can be specified by "designate by tracing list head to object sequentially" 905, it "assign assigned object and invoke "procedure to write out object data" by assigning the file obtained procedure to write out the data of an object" 907.

This is a procedure which was explained in section 11.3. At this moment, the file's assignment is handed by the file pointer (fp).

The given file pointer (fp) is used to do procedure to write out until immediately before "procedure to write out the data of corresponding (managing) set of the object" 811 procedure in "procedure to write out the data of an object" (section 11.3).

Furthermore, "write out the data of corresponding (managing) set of the object" 811 procedure is "procedure to write out the set of an object" that is being explained at this section. The concerns here is the assignment method of the file name. So in "receive assignment of the file name" 903 procedure, it "uses file name given beforehand by assigned object if there is no assignment form the file."

For example, make the name of a file which is to be retaining data of the set of an object corresponding (managing) a1 object 204 as a1.bak, and set it to a1 object 204 beforehand. It is convenient to add this file name to the data which writes out and retains at "procedure to write out the data of an object".

It is also good to "automatically create a file name if there are no assignment for a file" at "receive assignment of the file name" 903 procedure. For example, generate file name a1.bak from the name of a1object 204. By the way, it must be paid attention so file name collision will not occur.

The procedure ends by "close file" 908, when it is designated there are no succeeding object at "designate by tracing list head to object sequentially" 905.

This is how section 11.3's "procedure to write out the data of an object" and section 11.4's "procedure to write out the set of an object" are invoke interchanging at the recursive and the object tree writes out data of an object which it holds to different files for each of the set of an object.

When the object tree writes out all the data which it holds to a single file, it shall carry across the file pointer of the file it opened first.

The file pointer is carried over to the procedure to write out the data of an object of section 11.3 at "assign assigned object and invoke "procedure to write out object data" by assigning the file obtained procedure to write out the data of an object" 907 procedure after getting file pointer by opening a file at "procedure to write out the set of an object", which was invoked first. Up to here, it is the same with the case when a file is divided, but the same file pointer is carried over to "procedure to write out the set of an object" of section 11.4 at "write out data of the corresponding (managing) the set of the object" 811 procedure. That is, the file pointer is received in "receive assignment of the object" 901 procedure. And the procedure to "open file" 904 and the procedure which "close file" 908 do not invoke. That is, the "open file" 904 procedure and the "close file" 908 procedure only carry out at "procedure which writes out the set of an object", invoked at first.

All the data of an object of the object tree can be write out to a single file like this.

### 〈Section 11 . 5 Procedure to read-in the data of an object〉

A procedure which replays an object given a file pointer which is already been open, in figure 10.

First of all, "receive assignment of a file to be read-in" 1001. Let's say a file pointer (fp) is given here. Next, "read-in class identifier and generate object" 1002. As the example was shown in "procedure to write out the data of an object" of section 11.3, there are unique character strings (or numbers) in every class of class identifier. An object can be generated by knowing the correspondence between this character string and a command for generating class's object. Building in the correspondence of the assumed character string and a procedure that requests a corresponding command in a program is one of the realization method.

Next, "read-in object identifier and set it to the object' 1003. If the object identifier is a character string "a1", a1 will be set as the name of an object. That is, a1 object 204 appears once obtained.

Some data are required to be replayed for object of the class other than object identifier. As said in "procedure to write out the data of an object" of section 11.3, the write out procedure of the data is defined as the member function as each classes, and in that, data of write out subject and its turn is assigned. The read-in procedure of data also defined as member function as each classes, and in that, the same subject as write out is assigned in same turn. In "read-in other object data" 1004 procedure, it is set to a corresponding variable to read-in data in this turn. Which, the turns for read-in are corresponding to turns of write out procedure of the data. By the way, this is simplified and expressed in figure 10.

To set a variable of integer, reads-in the character string and "convert character string to integer and set it to object variable" 1005. To set a variable of real number, read-in the character string and "convert character string to real number and set it to object variable" 1006. To set a variable of character string (char*), read-in the character string and "set character string to object variable" 1007. In order to simplify the explanation, letter (char), double real number type (double), double integer (long int) and others are omitted.

A pointer data which indicates objects inside of object tree are read-in as a combination (continuation of character strings) of object identifier. In this case, "set a combination of character strings to object as pointer development data" 1008. That is, read-in this continued character strings as it is, and the transformation to a pointer is done when actually using a pointer.

For example, there is a pointer variable "pptr" in a1 object 204 of figure 2 and an the address of a5 object 210 is set. The data of pptr is transformed into character string "a1" and "a5" and wrote out to a file by "procedure which writes out the set of an object" of section 11.4. So, when the pointer data to a5 object 210 is read-in through the procedure of playback a1 object 204, the continued character string "a1" and "a5" are obtained. At this time, set a zero to the pointer variable (pptr=0;). And then, as a corresponding pointer development data to pointer pptr, it retains a combination of character strings (a1,a5). Designate a5 object 210 in object tree after a pointer becomes necessary, by using (a1, a5) and the procedure which sets the memory address to pptr for will be explained in "procedure which designates an object from the combination of object identifier" of section 11.8.

Although it is not shown in figure 10, other pointers are playback possible as of figure 1[A] with methods explained in section 4, only if the pointer and the object indicated are in a relation of one-to-one. Which means, playback the pointer indicating object and set the memory address to the pointer.

Although it is not shown in figure 10, sometimes other objects are included in objects. In C++, objects of other classes can be defined as a variable in the definition of a class. With this case, it shall be done by designating the object and invoke "procedure which reads-in the data of an object" of this section.

An object in an object is defined in class definition of C++, by describing the object of another class as a variable. And when generating the outside object, simultaneously, the inside object is generated. Therefore, "read-in class identifier and generate object" 1002 procedure is useless in reading an object in an object.

After reading-in all the assigned variable in the assigned turns, it moves on to "read-in data of corresponding (managing) set of the object" 1010 procedure.

However, when the data of an object held by object tree is wrote out to each of different files of the set of an object and also the intention is to read-in the necessary the set of an object at the time required, "read-in data of corresponding (managing) set of the object" 1010 procedure simply sets the pointer from management object to list head to a zero. The necessary the data of an object is read-in in "procedure which designates an object from a combination of object identifier" of section 11.8.

To read-in all the data of an object of object tree at once, there is a procedure to execute other than setting the pointer to list head from the management object in "read-in data of corresponding (managing) set of the object" 1010. The details will be explained in "a case which reads-in the whole object tree" of section 11.11.

Finally, "report the memory address of the object generated" convert. This reports the memory address of the object generated in "read-in class identifier and generate an object" 1002 procedure to the original invoke.

"Read-in class identifier and generate an object" 1002 procedure is equal to claim 1. "Read-in object identifier and set it to the object"1003 procedure, "read-in other object data"1004 procedure, "convert character string to integer and set it to object variable"1005 procedure, "convert character string to real number and set it to object variable"1006 procedure, "set character string to object variable"1007 procedure, "set a combination of character strings to object as pointer development data"1008 procedure, a procedure which reads-in the data of an object corresponding to a pointer one by one, and a procedure which reads-in data of an object in an object equals to claim 2.

### 〈Section 11 . 6 Procedure to read-in the first object〉

The procedure to read-in the data of the first object is shown in figure 11. First, "receive assignment of the file to be read-in" 1101. "Invoke 'procedure to read-in object data'" 1103 after "open file" 1102 procedure. This is a procedure of section 11 . 5. At last, "close file" 1104.

Here, the data of an object held by an object tree is wrote out to each of different the set of an object and reading-in the necessary the set of an object at the time needed (refer section 8.1) is imagined. In this case, nothing is to re done in "read-in data of corresponding (managing) set of the object" 1010 procedure.

That is, the first data of an object of the object tree is reproduced from the file. A0 object 201 is reproduced in an example of figure 2. The objects other than this is read-in in the procedure that develops a pointer, namely, "procedure to designate an object from the combination of object identifier" of section 11.8.

The details of a case which an object tree reads-in all the object it holds at once will be explained in "a case which reads-in the whole object tree" of section 11.11.

### 〈Section 11 . 7 Procedure to read-in the set of an object〉

The details of "procedure to read-in the set of an object" is shown in figure 12.

First, "receive assignment of the object" 1201. Here, we imagine the a0 object 201 of figure 2 is assigned. It "generate a corresponding list head" 1202 and the address (That is, an address of a0 list head 203) is set to a pointer to list head that a0 object 201 has.

Next, "designate a file name which was wrote out by data of corresponding (managing) the set of an object" 1203. There were few methods to assign this file name, like explained in section 11.4. Here, we assume a method which automatically produce a file name form specified object's name and explain the procedure. Since a0 object 201 is assigned, we designate it by a0.bak as our file name using object identifier (character string a0) of a0 object 201. By the way, this name must agree with file name that will be used in "procedure to write out the set of an object" of section 11.4.

When the file name is given form outside against the management object at "procedure to write-out the set of an object" of section 11.4, the file name must be a data to be retained in the management object and read-in playback at "procedure to read-in the data of an object" of section 11.5.

"Open file" 1204 which is specified and "invoke 'procedure to read-in the data of an object' and accommodate reported object to the list" 1205. "Check if there is still any data left in the file" 1206 and if there is, repeat the procedure of "invoke 'procedure to read-in the data of an object' and accommodate reported object to the list" 1205. Set 202 of an object corresponding to a0 object 201 is re-constituted by this. If nothing comes to surface as a result of the procedure to "check if there is still any data left in the file" 1206, "close file" 1207 and ends it.

Here, we assume a case which the files differ for each of the set of an object and each of the file reads-in data.

### 〈Section 11 . 8 A procedure to designate an object from the combination of object identifier〉

As explained in "procedure to read-in the data of an object" of section 11.5, the pointer data is read-in as a combination (continuation of character string) of object identifier to designate the object indicated by a pointer in an object tree.

For example, a zero is set to the pointer variable to a5 object 210 from a1 object 204 of figure 2 (pptr=0;), but we assume a combination of character strings (a1, a5) is set to pointer development corresponding to pointer pptr. Also, sometimes, character string a1 and character string a5 are directly assigned from the pointer data of the user interface.

Check the value of pptr before using pointer pprt. If the value of pptr is zero, refer the corresponding pointer development data and obtain (a1, a5). A procedure to find the memory address of the pointer, that is, a5 object 210 from this is shown in figure 13. This is "procedure to designate an object from the combination of object identifier".

Assuming a case (a1, a5) is assigned as a combination of object identifier in a condition where only a0 object 201 of the object tree of figure 2 is read-in, and details of a procedure to designate the object from this will be explained in the following.

First of all, "receive assignment of object to start search " 1301. Usually, we assign the root of an object tree. If it is the object tree of figure 2, we assign a0 object 201. Yet, if there is no assignment of search start object, we can predict the root object of an object tree is assigned and resume the procedure.

Next, "receive assignment of a combination of object identifier" 1302. (a1, a5) is assigned here. If (a0, a1, a5) is assigned as a combination of object identifier, the leading a0 equals the assignment of search start object. To simplify our explanation here, we assume a0 object 201 as search start object and (a1, a5) as assignment of the combination of object identifier.

Next, "check a pointer to a list head of the assigned object" 1303. If the value of the pointer is zero, "invoke procedure to read-in object set" 1305 since the data of the corresponding the set of an object is still not read-in. (Refer section 11.5). This procedure was explained in section 11.7. "The set of an object corresponding to a0 object 201" 202 is reproduced by this.

Next, "search object set corresponding to the object assigned as start point of search, for the object with the top object identifier of a combination of object identifier" 1306. As for the example, search an object of name a1 from the inside of an object connected with a0 list head 203. And then, "copy the combination of object identifier and delete the top object identifier of the top" 1307. (A5) can be obtained in an example. Normally, the value handed as an argument of a function is copied, but when the data is handed as a combination of object identifier, a copy is needed before procedure the data.

It "judge if contents are there in this copied object identifier designate" 1308. In the example, there is a content, so "use this discovered object and use the copied combination of object identifiers to start search and re-invoke 'procedure to designate an object from the combination of object identifiers'" designates 1310. Which means, invoke the function which are being explained now to a recursive by reduced requirement.

A1 object 204 as search start object and (a5) as the combination of object identifier are assigned for the next start. As a result of "search object set corresponding to the object assigned as start point of search, for the object with the top object identifier of a combination of object identifier" 1306, a5 object 210 is found out. Also, if it is copied and the object identifier of the top is eliminated, the content of the combination of object identifier disappears. That is, it advances to "report memory address of discovered object" 1311 procedure directly, because the result of "judge if contents are there in this copied object identifier designate" 1308 is No.

In the procedure of "report memory address of discovered object" 1311, the memory address is reported the original start. This is the result of a procedure to designate an object from the combination of object identifier. Yet, if the memory address is recorded in the original start, it can be used next time for a high speed access.

Above is equal to claim 4 [C], "procedure to designate an object from the combination of object identifier".

### 〈Section 11 . 9 Realization of simple virtual memory〉

An application which satisfies a high speed of memory efficiency and procedure can be accomplished by "procedure to designate an object from the combination of object identifier" of section 11.8.

Reproduce only object (a0 object 201 in figure 2) of the root of object tree on main memory at first and then reproduce the set of objects when necessary at the stage which it obtains access to an object at a pointer. Once it is converted into a pointer, a high speed procedure can be accomplished from the next time using that pointer. Even if the set of an object to be reproduced increases and the main memory ran short, nothing shall be done at the application if there is memory management faculty of OS.

However, memory management is accomplished in an application to control the main memory finer. The method introduced at "simple virtual memory" of section 8.1 is a method which writes out low used data of the set of an object and opens the main memory when the main memory is frequently used.

If the object of the ahead is opened, even if the combination of object identifier is converted to a pointer and has been held the value, the pointer would not be able to be used. A method to solve this is introduced in the following.

At first, express the data corresponding to the former pointer in a combination of the pointer, the combination of object identifier and time stamp storage variable. The initial value of the pointer and the time stamp storage variable are both zero.

Also, "open time common variable" is defined as common variable and the initial value is put as a zero.

If the combination of object identifier is given, a value will be able to set by "procedure to designate an object from the combination of object identifier" of section 11.8 to a pointer. And even if the value of the pointer was given previously the combination of object identifier can be found. This procedure can accomplish the destination that writes out in "procedure to write out the data of a pointer to an object" of section 11 . 2 in a procedure which changed to main memory.

In using a pointer, first of all it checks the open time common variable. The pointer will be used, if the value is 0 and the target value of the pointer has been set.

When the set of objects are opened even if there is referring pointer to save main memory, it sets the opening time to the open time common variable.

It comes to surface the value exists to the open time common variable when using a pointer once obtained. This time whether the value of time stamp storage variable corresponding to a pointer is a zero, or if the time of the time stamp storage variable corresponding to a pointer is before the open time common variable, the combination of object identifier will be converted into a pointer, and the time will be recorded to time stamp storage variable.

The pointer which converted and set the combination of object identifier before the object is opened will be set obtained to the time after the object is opened, by this mechanism.

When the use of the main memory becomes over limit, it invokes "procedure to write out the set of an object" of section 11.4 by assigning specific object from the using condition of the object. For example, let's say a2 object 205 of figure 2 is assigned. Also, let's assume the file name a2.bak is assigned beforehand to a2 object 205, or it is to be generated automatically from the name a2 of object 205.

After this, the content of the object tree after the object assigned first will be wrote out to different file of each of the set of an object since "procedure to write out the data of an object" of section 11.3 and "procedure to write-out the set of an object" of section 11.4 will be invoked at the recursive. The data of set 211 of the object corresponding to a2 object will be outputted to file a2.bak in the example of figure 2.

And it opens the object wrote out in the data of the file from the main memory. Set 211 of the object corresponding to a2 object is opened from the main memory in the example. Finally, set the value of a pointer to a2 list head 212 that a2 object 205 holds. This becomes an opportunity of "invoke procedure to read-in object set" 1305 procedure in "procedure designate an object from the combination of object identifier" of section 11.8. That is, it becomes the key to reread-in and playback the opened object's data.

Thus, a simple virtual memory can accomplish.

There are much work to accomplish in order to designate an object from the combination of object identifier. In order to use this simply, new class (pointer class) class Ptr{}; shall be defined. As the variable which this class holds, we define a pointer, a list which accommodates the combination of object identifier and a time stamp storage variable. Also, as a function, void* Ptr::operator->(){"procedure which search and report the address of the target object"} is defined. The content of this procedure is explained at this section and section 11.8. To make the return value of Ptr::operator->() as the type of the target object, methods such as Safe Casting should be used to do so.

By the way, it is possible to simplify the procedure as the set of an object never opens no matter there are referring pointer. That is, it reports the value of the pointer if there is one, and if the value is zero, then designate the object from the combination of object identifier, set the memory address to the pointer and report to the original caller.

In class Ptr, a function which writes-out the pointer data. void Prt::PrtOut(){"procedure that outputs the content of a list which accommodates a combination of object identifier, or if there are none, convert the content of a pointer into the continuation of object identifier"} can be defined.

Also, a function which reads-in the pointer data void Prt::Prtln(){"procedure to read-in object identifier and accommodate the list which accommodates the combination of object identifier"} can also be defined.

If the variable of the pointer class is defined at declaration Ptr APrt; the combination of object identifier will be read-in at APtr.PtrIn. The memory address of the target object can be specified at APtr. Operator->();. The combination of object identifier is outputted at APtr.PtrOut();.

As said in section 8.2, "correspondence to the dispersion of data" can be accomplished as a simple virtual memory, replacing the storage medium to a different computer. For that, add management object that indicates the list head to a pointer and introduce valuable which assigns computers.

As an example, let's assume set 206 of an object corresponding to a1 object 204 is the only thing accommodated in computer P in the object's data of figure 2. Assume other data and the procedure that access to it are in computer Q. This time, the valuable that assigns the computer of a1 object 204 is set in computer P. Also, when a zero is set to a pointer to a list head of a1 object 204.

Assume (a1, a5) for a combination of object identifier and a0 object 201 for the search start object are assigned respectably. And it detects the pointer to a list head of a1 object 204 is zero in "procedure to designate an object from the combination of object identifier".

At this time, it refers the variable that assigns the computer of a1 object 204 and demands the data of the set of an object to computer P. That is, it demands to computer P as it transfers the data that a1 object manages. The procedure to read-in data from computer P and to generate copies of the set of an object is "procedure to read-in the set of an object" of section 11.7. In short, the difference between "procedure to designate an object from a combination of object identifier" of section 11.8 is whether the source of the data is a file (storage medium) or a computer. The method explained in "accomplish a simple virtual memory" of section 11.9 also can be adapted by changing the source of the data from a file (storage medium) to a computer.

A pointer to an object can be held by; copy object's data to a computer which needs it, generate a copy of the object to an object tree, and designate the copy of the object needed. If this is thereafter used, a high speed access will be possible.

If the modification of the object's data is done by plural procedure, a device is required to always obtain the latest data. As one of the method, there is a method which converts continuation of the object identifier into a pointer at the case when a pointer is necessary each time.

### 〈Section 11 . 11 A case which reads-in the whole object tree〉

As explained in "procedure to read-in the data of an object" in section 11.5, in a case which it reads-in data for each of the object., "read-in data of corresponding (managing) of the object" 1010 procedure simply sets the pointer to a list head from the management object to a zero, and nothing else.

However, in a case where it reads-in data separated to plural files as a bundle or a case where it reads-in data outputted as a single data of the whole object tree as a bundle, there is more procedure to be executed in "read-in data of corresponding (managing) set of the object" 1010 procedure.

### 〈 Section 11 . 11 . 1 In the case of plural file 〉

Procedure that reads-in the whole object tree from plural file divided each of every set of an object are explained thoroughly. First of all, invoke "procedure to read-in the first object" of section 11.6. "Procedure to read-in the data of an object" of section 11.5 is invoked by "invoke "procedure to read-in object data procedure" 1103 procedure. Here, invoke "procedure to read-in the set of an object" of section 11.7 at "read-in data of corresponding (managing) set of the object" 1010 procedure.

Here, the assignment of "receive assignment of the object" 1201 is an object generated at "generate an object by reading-in the class identifier" 1002 procedure of "procedure to read-in the data of an object" of section 11.5.

By invoking "procedure to read-in the data of an object" of section 11.5 and "procedure to read-in the set of an object" of section 11.7 interchanging to a recursive, the whole data of the object tree is read-in.

### 〈 Section 11 . 11 . 2 In the case of single file 〉

Procedure that reads-in the whole object tree from a file is explained thoroughly. First of all, invoke "procedure to read-in the first object" of section 11.6. "Procedure to read-in the data of an object" of section 11.5 is invoked by "invoke "procedure to read-in object data " procedure" 1103 procedure. Here, invoke "procedure to read-in the set of an object" of section 11.7 at "procedure to read-in data of corresponding (managing) set of the object" 1010 procedure.

Yet, the assignment of "receive assignment of the object" 1201 is an object generated at "generate an object by reading-in the class identifier" 1002 procedure of "procedure to read-in the data of an object" of section 11.5.

File pointer moreover, obtained as a result of "open file" 1102 procedure is passed to "procedure to read-in the set of an object" of section 11.7 through "procedure to read-in the data of an object" of section 11.5. Since it reads-out the data from this file pointer, procedure which "designate a file name which data of corresponding (managing) the set of an object wrote out" 1203, "open file" 1204 and "close file" 1207 are skipped.

By invoking "procedure to read-in the first object" of section 11.6 like this, "procedure to read-in the data of an object" of section 11.5 and "procedure to read-in the set of an object" of section 11.7 are invoked at the recursive and all the data of the object tree can be read-in from one file one after another.

### 〈 Section 11 . 12 Program constitution example 〉

A program constitution example which execute the above procedure at the computer of figure 4, shown at the top of section 11, is shown in figure 14. This program execute a function which generates and accommodates an object, a function which writes out the data of an object held in the object tree to each of different set of an object, and a function which reads-in this.

It analyze the signal from input unit 401 at "reception procedure of event to invoke procedure" 1401 and invokes the corresponding procedure. Also, sometimes the handling procedure invoke event appears from each procedure. These are also analyzed at "reception procedure of event to invoke procedure" 1401 and invoke the corresponding procedure.

Procedure which are to be invoked are "procedure to generate and accommodate an object procedure to generate and accommodate an object" 1402 of section 11.1, "procedure to write out pointer data to an object" 1403 of section 11.2, "procedure to write out object data" 1404 of section 11.3, "procedure to write out object set" 1405 of section 11.4, "procedure to read-in object data" 1406 of section 11.5, "procedure to read-in the first object" 1407 of section 11.6, "procedure to read-in object set" 1408 of section 11.7, and "procedure designates to designate an object from a combination of object identifier" 1409 of section 11.8. Procedure of other original application can be added to this but since they are unrelated to this invention, they are omitted in figure 14.

To generate an object and to accommodate it to an object tree, invoke "procedure to generate and accommodate an object" 1402.

To store the whole data of an object tree in a file of the storage medium of secondary memory unit 405, designate the object (a0 object 201, in figure 2) of the object tree's root part and invoke "procedure to write out object set" 1405. From this, "procedure to write out object data" 1404 is invoked , and "procedure to write out pointer data to an object" 1403 is also invoked.

To reproduce necessary data of an object to each of the set of an object, first, invoke "procedure to read-in the first object" 1407. By this, the object (a0 object 201, in figure 2) of the object tree's root part is reproduced.

"Procedure to designate an object from a combination of object identifier" 1409 is invoked, when to transform a combination of object identifier to a pointer. From this, "procedure to read-in object set" 1408 and "procedure to read-in the first object" 1407 are both invoked, and the data of necessary set of an object is read-in.

### 〈 Section 12 Object management unit 〉

A realization example of a mechanism corresponding to a enforcement example of object management method, showed in program constitution example of section 11.12 is shown in figure 15.

Input from "input unit" 1501 is analyzed in "input analyzing means" 1510 and a signal is sent to means corresponding to that. Means that have a possibility of receiving a signal are "means for generation and accommodating object" 1502, "means for writing out pointer data to object" 1503, "means for writing out pointer data to object" 1504, "means for writing out object set" 1505, "means for reading-in object data" 1506, "means for reading-in the first object" 1507, "means for reading-in object set" 1508, and "means for designating object form a combination of object identifiers designate" 1509, and each of them are means which accomplished these procedure, "procedure to generate and accommodate an object" 1402, "procedure to write out pointer data to an object" 1403, "procedure to write out object data" 1404, "procedure to write out object set" 1405, "procedure to read-in object data" 1406, "procedure to read-in the first object" 1407, "procedure to read-in object set" 1408, and "procedure to designate an object from a combination of object identifier" 1409, on a hardware such as microprocessor. Means of other original application can be added to this but since they are unrelated to this invention, they are omitted in figure 15.

When a signal is inputted to "means for generation and accommodation object" 1502, it generates an object based on the data from "main memory unit" 1511 and accommodates it in an object tree inside of "main memory unit" 1511.

If the signal to "means for writing out object set" 1505 is assigning the object (a0 object 201 of figure 2) of the root of an object tree, it records the whole data of the object tree inside of "main memory unit" 1511 to a file of a storage medium of secondary memory unit 1512. Furthermore, the signal from "means for writing out object set" 1505 is inputted to "means for writing out object data" 1504 passing through "input analyzing means" 1510 and the signal from "means for writing out object data" 1504 is inputted to "means for writing out pointer data to object" 1503 passing through "input analyzing means" 1510, and assists the work to record the whole data of an object tree to a file of the storage medium of secondary memory unit.

When the signal which assigned the object (a0 object 201 of figure 2) of the object tree's root is inputted to "means for reading-in the first object" 1507, the object of the object tree's root is playback.

When the signal which assigned the combination of object identifier is inputted to "means for designating object form a combination of object identifiers designate" 1509, it is inputted gearing to "means for reading-in object set" 1508 and "means for reading-in the first object" 1507 by passing through "input analyzing means" 1510 and then the necessary data of the set of the object is read-in. At the same time, memory address of the reproduced object is recorded to main memory unit 1511, and transmitted to other means as a signal.

### Industrial Applicability

### 〈 Section 13 Industrial applicability 〉

As mentioned above, the object management method and its mechanism of this invention can be used widely to retain and playback an object and a pointer, in a programming of object-oriented. Also, it can be used to disperse the data of an object to plural mechanism or be used to accomplish a simplified virtual memory, in a object-oriented programming. Furthermore, it can be used to generate data of an object on a file by an editor and have it read-in in a program or be used to generate an object or a pointer from data received from communications line. By this, it is possible accomplishes a high degree faculty in Web browser used in the Internet.

## Claims

1. An object management method, comprising;
a procedure to read a class identifier and generate an object.

2. The object management method according to Claim 1, comprising;
a procedure to read content data of object and create an object.

3. The object management method according to Claim 2, comprising;
(a) a procedure to write out a class identifier of object, and
(b) a procedure to write out content data of said object.

4. An object management method, comprising;
(a) a procedure to assign a management object to a set of objects, and
(b) a procedure to assign object identifier to an object, and
(c) a procedure to identify object from a combination of object identifiers.

5. The object management method according to Claim 4, comprising;
a procedure to set a management object as an member of a set.

6. The object management method according to Claim 5, comprising;
a procedure to convert a pointer to a series of object identifiers.

7. The object management method according to Claim 6, comprising;
(a) a procedure to write out class identifier of an object, and
(b) a procedure to write out content data of said object, and
(c) a procedure to read class identifier and generate an object, and
(d) a procedure to read content data of object and set them to said object.

8. An object management apparatus comprising;
a means for reading class identifier and generating object.

9. The object management apparatus according to Claim 8, comprising;
a means for reading content data of object and creating object.

10. The object management apparatus according to Claim 9, comprising;
(a) a means for writing out class identifier of an object, and
(b) a means for writing out content data of said object.

11. An object management apparatus, comprising;
(a) a means for to assigning a management object to a set of objects, and
(b) a means for assigning object identifier to an object, and
(c) a means for identifying object by combination of object identifiers.

12. The object management apparatus according to Claim 11, comprising;
a means for setting management object as an member of a set.

13. The object management apparatus according to Claim 12, comprising;
a means for converting a pointer to a series of object identifiers.

14. The object management apparatus according to Claim 13, comprising;
(a) a means for writing out a class identifier of object, and
(b) a means for writing out content data of said object, and
(c) a means for reading class identifier and generate an object, and
(d) a means for reading content data of object and set them to said object.
